(19) Europäisches Patentamt
European Patent Office
Office européen des brevets

(11) **EP 3 712 720 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(51) Int Cl.:
**G05B 13/02** *(2006.01)* **G05B 9/03** *(2006.01)*

(21) Anmeldenummer: **19164308.9**

(22) Anmeldetag: **21.03.2019**

(54) **VERFAHREN UND VORRICHTUNG ZUR ANSTEUERUNG EINER TECHNISCHEN ANLAGE MITTELS EINER ADAPTIVEN SIMPLEX ARCHITEKTUR**

METHOD AND DEVICE FOR CONTROLLING A TECHNICAL SYSTEM USING AN ADAPTIVE SIMPLEX ARCHITECTURE

PROCÉDÉ ET DISPOSITIF DE COMMANDE D'UNE INSTALLATION TECHNIQUE AVEC UNE ARCHITECTURE SIMPLEX ADAPTATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.09.2020 Patentblatt 2020/39**

(73) Patentinhaber: **Siemens Aktiengesellschaft 80333 München (DE)**

(72) Erfinder: **Ionescu, Tudor 1090 Wien (AT)**

(74) Vertreter: **Maier, Daniel Oliver Siemens AG Postfach 22 16 34 80506 München (DE)**

(56) Entgegenhaltungen:
**US-A1- 2019 056 735**

• XIAOFENG WANG ET AL: "RSimplex", ACM TRANSACTIONS ON CYBER-PHYSICAL SYSTEMS, ACM, 2 PENN PLAZA, SUITE 701 NEW YORK NY 10121-0701 USA, Bd. 2, Nr. 4, 5. Juli 2018 (2018-07-05), Seiten 1-26, XP058410246, ISSN: 2378-962X, DOI: 10.1145/3121428
• D. SETO ET AL: "The Simplex architecture for safe online control system upgrades", 2015 AMERICAN CONTROL CONFERENCE (ACC), 26. Juni 1998 (1998-06-26), Seite 3504, XP055619329, ISSN: 0743-1619, DOI: 10.1109/ACC.1998.703255
• BAK S ET AL: "The System-Level Simplex Architecture for Improved Real-Time Embedded System Safety", REAL-TIME AND EMBEDDED TECHNOLOGY AND APPLICATIONS SYMPOSIUM, 2009. RTAS 2009. 15TH IEEE, IEEE, PISCATAWAY, NJ, USA, 13. April 2009 (2009-04-13), Seiten 99-107, XP031450848, ISBN: 978-0-7695-3636-1

**Beschreibung**

Die Erfindung betrifft ein Verfahren zur Ansteuerung einer technischen Anlage, in welcher, ausgehend von einem Steuerbefehl, eine erste Rechenvorrichtung einen ersten Programmcode bereitstellt und eine zweite Rechenvorrichtung einen zweiten Programmcode bereitstellt, wobei die erste Rechenvorrichtung eine sichere Rechenumgebung bildet und die zweite Rechenvorrichtung eine schnelle Rechenumgebung bildet. Es ist ferner eine Testvorrichtung vorgesehen, welche den zweiten Programmcode ausführt und zumindest einen Verifikationsparameter für den zweiten Programmcode bestimmt. Eine Steuervorrichtung führt abhängig vom Erreichen eines vorbestimmten Kriteriums für den zumindest einen Verifikationsparameter entweder den ersten Programmcode oder den zweiten Programmcode aus und erzeugt zumindest eine Steuerinstruktion zur Ansteuerung der technischen Anlage, sowie erfasst zumindest einen Betriebsparameter der technischen Anlage.

Außerdem betrifft die Erfindung eine Vorrichtung zur Ansteuerung einer technischen Anlage, umfassend eine erste Rechenvorrichtung, welche eine sichere Rechenumgebung bildet und dazu eingerichtet ist, einen ersten Programmcode bereitzustellen, und eine zweite Rechenvorrichtung, welche eine schnelle Rechenumgebung bildet und dazu eingerichtet ist, einen zweiten Programmcode bereitzustellen. Ferner ist eine Testvorrichtung umfasst, welche dazu eingerichtet ist, den zweiten Programmcode auszuführen und zumindest einen Verifikationsparameter für den zweiten Programmcode zu bestimmen. Ferner ist eine Steuervorrichtung umfasst, welche dazu eingerichtet ist, abhängig vom Erreichen eines vorbestimmten Kriteriums für den zumindest einen Verifikationsparameter entweder den ersten Programmcode oder den zweiten Programmcode auszuführen und zumindest eine Steuerinstruktion zur Ansteuerung der technische Anlage zu erzeugen, sowie zumindest einen Betriebsparameter der technischen Anlage zu erfassen.

Autonome, selbstorganisierende, kollaborative "Cyber-Physical Production Systems" (CPPS) verlassen sich auf komplexe Software, um Produktionsdienstleistungen wie beispielsweise das automatisierte Montieren von Bauteilen oder Bohren von Befestigungslöchern zur Montage zu implementieren. Die Softwarekomplexität dieser Dienste steigt im Allgemeinen mit höheren Anforderungen an Sicherheit, Flexibilität, Genauigkeit, Autonomie und Leistung, die an das CPPS gestellt werden. Zum Beispiel müssen kollaborationsfähige, autonome und teilautonome Roboter bei der Ausführung komplexer Produktionsschritte sowie bei der Interaktion mit Menschen sich selbst überwachen und ihre Bewegungen sehr präzise planen und koordinieren.

Diese Anforderungen werden in der Regel durch die Integration komplexer Software für rechenintensive Prozesssteuerung und - regelung, sowie für maschinelles Lernen, die von Dritten angeboten werden und in sicherheitskritischer, eingebetteter CPPS-Software eingesetzt werden, erfüllt. Dies kann zu intransparenten Funktionsabhängigkeiten sowie einem Anstieg der Softwarekomplexität und des Nichtdeterminismus im Betrieb führen. Eine hohe Systemkomplexität wird als eine der Hauptursachen für Softwarefehler und -ausfälle betrachtet und birgt somit Risiken für die Sicherheit, Zuverlässigkeit und Wartbarkeit von CPPS.

Sicherheit, Belastbarkeit und Autonomie von softwareintensiven CPPS wird in der Regel durch den Einsatz von entsprechenden Softwareentwicklungsprozessen und -methoden wie das V-Modell und Wasserfall-Modell sichergestellt, die die Softwarequalität, Testbarkeit, Überprüfbarkeit, Zertifizierbarkeit und Standardkonformität hervorheben. Darüber hinaus wird eine ganze Reihe von Methoden aus dem Bereich des Software Reliability Engineering eingesetzt. Insbesondere die Simplex-Architektur hat sich als äußerst zuverlässig erwiesen, um die Zuverlässigkeit von Hochsicherheitssystemen sicherzustellen. Da diese Methoden ziemlich rigide und kostspielig sind, werden sie zunehmend durch Agile-Entwicklung, DevOps und andere moderne Entwicklungsparadigmen von der Industrie abgelöst, die Sicherheit, Belastbarkeit und Wartbarkeit nicht besonders hervorheben.

Maschinelles Lernen (ML) bietet derzeit die vielversprechendsten Hebel für die Entwicklung von äußerst anpassungsfähigen und autonomen CPPS. Bisher wird die Einbettung von ML-Funktionen in die CPPS-Software normalerweise auf eine der folgenden Arten realisiert, die auch verschiedene Nachteile mit sich bringen:

- Durch Integration komplexer ML- und statistischer Bibliotheken von Drittanbietern in die eingebettete CPPS-Software werden Risiken potenzieller Softwarefehler in Bibliotheken von Drittanbietern in ein System eingeführt. Darüber hinaus kann ihre Verwendung möglicherweise spezielles Wissen der Programmierer erfordern, was unerwünscht sein kann.
- Durch Verwendung extern gehosteter ML-Algorithmen und komplexen Berechnungsdiensten können Verzögerungen bei der Intranet- bzw. Internet-Kommunikation in ein System eingeführt werden, welche die Autonomie des CPPS in Bezug auf die Verfügbarkeit der verwendeten Ferndienste einschränken können.
- Die Implementierung komplexer ML-Algorithmen und statistischer Methoden als Teil der CPPS-Software kann die Komplexität der eingebetteten CPPS-Software und damit die Wartungskosten weiter erhöhen.

Die genannten Möglichkeiten, ML-Techniken und komplexe Statistiken in die sicherheitskritische eingebettete CPPS-Software zu integrieren, können sowohl die Komplexität des Systems als auch das Risiko nicht deterministischen Verhaltens erhöhen. Eine solche Komplexität kann die Erfüllung der typischen Sicherheits-, Ausfallsicherheits- und Wartbarkeitsanforderungen, die an einsatzkritische CPPS-Systeme gestellt werden, einschränken oder sogar verhindern. Momentan gibt es keine zufriedenstellenden, kostengünstige und risikoarme Lösungen für das Problem der Entwicklung sicherheitskritischer Embedded-Software für autonome CPPS auf der Grundlage von ML-Techniken und komplexen Statistiken, insbesondere für agile Entwicklungsprozesse und -methoden.

XIAOFENG WANG et al. "RSimplex" offenbart eine Steuerung basierend auf einer Simplex Architektur, wobei eine erste sichere Rechenvorrichtung einen ersten Programmcode und eine zweite schnelle Rechenvorrichtung einen zweiten Programmcode bereitstellt und wobei ein Selektor anhand von Messwerten der technischen Anlage entscheidet, welcher Programmcode ausgeführt wird, wobei bei nicht Erfüllung bestimmter Regeln, die sichere Rechenvorrichtung ausgewählt wird.

D. SETO et al. "The Simplex architecture for safe online control system upgrades" offenbart eine Steuerung basierend auf einer Simplex Architektur, wobei bei nicht Erfüllung bestimmter Regeln, ein Update des "Experimental Control Modules" signalisiert wird.

US 2019/056735 A1 und BAK S. et al. "The System-Level Simplex Architecture for Improved Real-Time Embedded System Safety" offenbaren eine Steuerung basierend auf einer Simplex Architektur für autonom fahrende Fahrzeuge.

Es ist Aufgabe der Erfindung eine Lösung bereitzustellen, welche eine sowohl schnelle als auch sichere Umgebung zur Ausführung von Programmcodes zur Ansteuerung einer technischen Anlage bietet, und dabei insbesondere für hohe Anforderungen an Sicherheit, Belastbarkeit und Wartbarkeit, aber auch an Autonomie, Flexibilität, hohe Leistung und Laufzeitanpassungsfähigkeit von CPPS sicherstellt.

Die Aufgabe der Erfindung wird durch ein Verfahren gemäß Anspruch 1, insbesondere durch ein Verfahren der eingangs genannten Art gelöst, indem eine Überwachungsvorrichtung zumindest einen Überwachungsparameter, ausgewählt aus der Gruppe von dem zweiten Programmcode, dem zumindest einen Verifikationsparameter, der zumindest einen Steuerinstruktion und dem zumindest einen Betriebsparameter, bestimmt, und eine Emulationsplattform zumindest ein Modell bestimmt, welches durch einen, von der zweiten Rechenvorrichtung umfassten, statistischen Emulator zur Bestimmung des zweiten Programmcodes herangezogen wird.

Der neu bestimmte zweite Programmcode wird anschließend zur weiteren Verarbeitung durch einen Programmcode-Selektor, welcher zwischen dem ersten und dem zweiten Programmcode als in weiterer Folge auszuführenden Programmcode wählt, bereitgestellt.

Das Modell ist ausführbar, das heißt kann von der zweiten Rechenvorrichtung ausgeführt werden.

Um die Komplexitäts- und Belastbarkeitsprobleme in CPPS zu bewältigen, erweitert die Erfindung die bekannte Simplex-Architektur.

Der Steuerbefehl wird der ersten Rechenvorrichtung zugeführt, welche den ersten Programmcode, auch als Hochsicherheitsprogramm ("high assurance", HA) bezeichnet, bereitstellt und eine einfache und robuste Implementierung der kritischen Funktionalität auf Kosten einer geringeren Leistung darstellt. Der Steuerbefehl wird auch der zweiten Rechenvorrichtung zugeführt, welche den zweiten Programmcode, auch als Hochleistungsprogramm ("high performance", HP) bezeichnet, bereitstellt und eine leistungsfähigere Implementierung der kritischen Funktionalität, allerdings auf Kosten höherer Komplexität und damit geringerer Zuverlässigkeit darstellt.

Während der Laufzeit kann die Vorrichtung vom HP-Modus in den HA-Modus wechseln, wenn die Ausgabe des HP-Programms den Abnahmetest durch die Testvorrichtung nicht besteht. Auf diese Weise kann das Gesamtsystem meistens genauso leistungsfähig, wie das HP-Programm, und genauso zuverlässig wie das HA-Programm sein, sofern der Abnahmetest für die Ausgabe des HP-Programms zuverlässig arbeitet.

In einer Weiterbildung der Erfindung ist es vorgesehen, dass das Verfahren fortlaufend ausgeführt wird und wobei der zweite Programmcode durch den statistischen Emulator fortlaufend neu bestimmt wird. Dadurch wird ein flexibles und sich dynamisch anpassendes System erhalten.

In einer Weiterbildung der Erfindung ist es vorgesehen, dass die Emulationsplattform ein Verfahren ausführt, welches auf dem Prinzip des maschinellen Lernens oder der künstlichen Intelligenz beruht. Dadurch kann erreicht werden, dass basierend auf statistischen Auswertungen bereits erfolgten Ansteuerungen einer technischen Anlage beispielsweise Fehler oder ineffiziente Verfahrensschritte frühzeitig erkannt werden und durch eine Prognose die Ausführung des Programmcodes entsprechend angepasst wird.

In einer Weiterbildung der Erfindung ist es vorgesehen, dass der statistische Emulator ein Verfahren ausführt, welches auf dem Prinzip des Recovery Block-Ansatzes beruht.

Der Recovery Block-Ansatz versucht zu verhindern, dass verbleibende Softwarefehler die Systemumgebung beeinflussen, und zielt darauf ab, fehlertolerante Funktionskomponenten bereitzustellen, die innerhalb eines sequenziellen Programms verschachtelt sein können.

Dadurch wird erreicht, dass hoch performante Funktionskomponenten bei der Ausführung des Programmcodes zum Einsatz kommen.

In einer Weiterbildung der Erfindung ist es vorgesehen, dass das Kriterium für den zumindest einen Verifikationsparameter ein Parameter ist, welcher ein Maß für die Stabilität bei der Ausführung des zweiten Programmcodes durch die Testvorrichtung ist. Dieses Maß kann ein Laufzeitverhalten des zweiten Programmcodes sein, welches beispielsweise mittels vordefinierter Testsequenzen ermittelt wird. Dadurch wird beispielsweise erreicht, dass der zweite Programmcode auf spezielle Ereignisse vorab getestet wird, ohne dass die Produktionsanlage dazu herangezogen werden muss und dadurch unerwünschte Stehzeiten für die Produktion entstehen.

In einer Weiterbildung der Erfindung ist es vorgesehen, dass der zumindest eine Betriebsparameter ein Parameter ist, welcher ein Maß für Vibrationen, die Betriebstemperatur oder die Energieaufnahme der technischen Anlage ist. Dadurch wird erreicht, dass Parameter berücksichtigt werden, welche beispielsweise nicht durch vordefinierte Testsequenzen berücksichtigt werden können, da diese möglicherweise bislang noch nicht aufgetreten sind. Die Wahl des zumindest einen Betriebsparameters kann es erlauben frühzeitig Fehler zu erkennen, beispielsweise durch die Erfassung einer Betriebstemperatur.

In einer Weiterbildung der Erfindung ist es vorgesehen, dass die zumindest eine Steuerinstruktion zur Ansteuerung eines Roboters vorgesehen ist. Die Erfindung kann besonders günstig in der Ansteuerung von industriellen Robotern, welche Montage- oder Bearbeitungsschritte durchführen, angewandt werden.

Die Aufgabe der Erfindung wird auch durch eine Vorrichtung gemäß Anspruch 8, insbesondere durch eine Vorrichtung der eingangs genannten Art gelöst, indem ferner eine Überwachungsvorrichtung umfasst ist, welche dazu eingerichtet ist zumindest einen Überwachungsparameter ausgewählt aus der Gruppe von dem zweiten Programmcode, dem zumindest einen Verifikationsparameter, der zumindest einen Steuerinstruktion und dem zumindest einen Betriebsparameter, zu bestimmen, und eine Emulationsplattform dazu eingerichtet ist, zumindest ein Modell zu bestimmen, welches durch einen, von der zweiten Reichenvorrichtung umfassten, statistischem Emulator bei der Bestimmung des zweiten Programmcodes herangezogen wird.

Der neu bestimmte zweite Programmcode ist in weiterer Folge dazu vorgesehen, zur weiteren Verarbeitung einem Programmcode-Selektor bereitgestellt zu werden.

Der Programmcode-Selektor kann zwischen dem ersten und dem zweiten Programmcode wählen, abhängig davon, welcher ausgeführt werden soll.

In einer Weiterbildung der Erfindung ist es vorgesehen, dass die technische Anlage eine Produktionsanlage zur Herstellung technischer Güter, eine Testanlage von technischen Gütern oder eine Messeinrichtung zum Vermessen von technischen Gütern ist.

In einer Weiterbildung der Erfindung ist es vorgesehen, dass die Emulationsplattform eine virtuelle Maschine einer Cloud ist. Dadurch kann die Emulationsplattform auf einfache Weise komplexe Operationen ausführen, sowie im Betrieb dynamisch angepasst werden.

Die genannten Weiterbildungen der Erfindung können untereinander kombiniert werden.

Die Erfindung wird nachfolgend anhand eines in den beigeschlossenen Zeichnungen dargestellten Ausführungsbeispiels näher erläutert. In den Zeichnungen zeigt:

Fig. 1 ein Blockschaltbild eines Ausführungsbeispiels für eine erfindungsgemäße Vorrichtung,

Fig. 2 eine schematische Darstellung einer Emulationsplattform,

Fig. 3 eine schematische Darstellung eines Beispiels für einen statistischen Emulator basierend auf dem Recovery Block-Ansatz,

Fig. 4 eine schematische Darstellung eines Bewegungsablaufs eines Roboterarms.

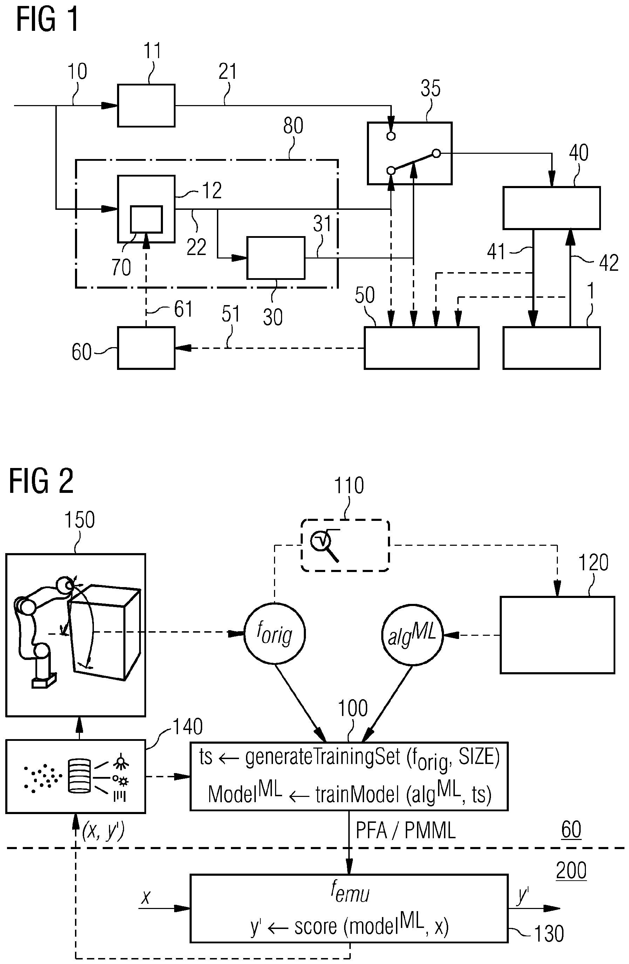

**Fig. 1** zeigt eine Gesamtansicht eines Ausführungsbeispiels der Erfindung basierend auf einer adaptiven Simplex-Architektur, die als technische Anlage 1 für eine cyberphysische Produktion konzipiert ist, bei welcher ein Cyber-Physical-Production-Equipment (CPPE, beispielsweise ein Roboter, ein Förderer, usw.) betrieben wird.

Der Dienst wird unter Verwendung von Produktions- oder Steuerbefehlen 10 aufgerufen, die die notwendigen Informationen zum Durchführen bestimmter Produktionsschritte (z. B. Zusammenbauen, Transportieren, Bohren, usw.) bereitstellen.

Die Implementierung des Dienstes verwendet zwei verschiedene Komponenten zur Planung und Ausführung des Produktionsschritts:
Es ist ein Hochsicherheitsplaner in Form einer ersten Rechenvorrichtung 11 und einen Hochleistungsplaner in Form einer zweiten Rechenvorrichtung 11 gemäß der Simplex-Referenzarchitektur vorgesehen.

Mit anderen Worten bildet die erste Rechenvorrichtung 11 eine sichere Rechenumgebung und die zweite Rechenvorrichtung 12 eine schnelle Rechenumgebung, zwischen welchen ein Programmcode-Selektor 35 aufgrund zumindest eines Verifikationsparameters 31 wählen kann.

Der zumindest eine Verifikationsparameter 31 kann beispielsweise ein Indikator für "Test bestanden" bzw.

"Test nicht bestanden" sein. Falls "Test nicht bestanden" zutrifft kann der Programmcode-Selektor 35 in den anderen Pfad der ersten Rechenvorrichtung 11 umschalten, und den ersten Programmcode 21 der weiteren, sicheren Verarbeitung zugrunde legen.

Ausgehend von dem Steuerbefehl 10 stellt die erste Rechenvorrichtung 11 einen ersten Programmcode 21 bereit und die zweite Rechenvorrichtung 12 einen zweiten Programmcode 22.

Ferner ist eine Testvorrichtung 30 vorgesehen, welche den zweiten Programmcode 22 ausführt und den zumindest einen Verifikationsparameter 31 für den zweiten Programmcode 22 bestimmt.

Das Kriterium für den zumindest einen Verifikationsparameter 31 ist mindestens ein Parameter, welcher ein Maß für die Stabilität und Konformität mit Sicherheitsnormen sowie mit funktionalen und nichtfunktionalen Anforderungen an das System bei der Ausführung des zweiten Programmcodes 22 durch die Testvorrichtung 30 ist.

Eine Steuervorrichtung 40 führt, abhängig vom Erreichen eines vorbestimmten Kriteriums für den zumindest einen Verifikationsparameter 31 entweder den ersten Programmcode 21 oder den zweiten Programmcode 22 aus und erzeugt zumindest eine Steuerinstruktion 41 zur Ansteuerung der technische Anlage 1, sowie erfasst zumindest einen Betriebsparameter 42 der technischen Anlage 1.

Die zumindest eine Steuerinstruktion 41 ist in diesem Beispiel zur Ansteuerung eines Roboters vorgesehen.

Der zumindest eine Betriebsparameter 42 kann ein Parameter sein, welcher ein Maß für Vibrationen, die Betriebstemperatur oder die Energieaufnahme der technischen Anlage 1 ist.

Beim Abnahmetest, welcher durch die Testvorrichtung 30 durchgeführt wird, wird geprüft, ob die Ausgabe des HP Planer, also der HP Plan bzw. der zweite Programmcode 22, zufriedenstellend arbeitet.

Wenn der Abnahmetest durch die Testvorrichtung 30 bei einem bestimmten HP Plan bzw. der zweite Programmcode 22 fehlschlägt, stellt das Simplex-Modul den HA-Plan an die Steuervorrichtung 40 bereit und folgt damit dem grundlegenden Arbeitsprinzip der Simplex-Referenzarchitektur.

Eine Überwachungsvorrichtung 50 bestimmt zumindest einen Überwachungsparameter 51, ausgewählt aus der Gruppe von dem zweiten Programmcode 22, dem zumindest einen Verifikationsparameter 31, der zumindest einen Steuerinstruktion 41 und dem zumindest einen Betriebsparameter 42.

Eine Emulationsplattform 60 erzeugt zumindest ein ausführbares Modell 61, beispielsweise in Form eines Anlagen- bzw. Programmcode-Modells, insbesondere eines ML-Modells, welches bei der Ausführung des zweiten Programmcodes 22 berücksichtigt wird. Die Emulationsplattform 60 kann Ausführungsprotokolle 140 ("Execution Logs") speichern und auswerten, welche von einer Überwachungsvorrichtung 50 bereitgestellt werden, wie weiter unten unter Fig. 2 näher beschrieben.

Es wird ein statistischer Emulator 70 zur Erzeugung des zweiten Programmcodes 22 verwendet.

Der statistische Emulator 70 ist ein trainiertes ML-Modell, welches von der Emulationsplattform 60 (z.B. Amazon AWS, oder ein Matlab Server, der viele ML-Werkzeuge zur Verfügung stellt) trainiert, bzw. generiert wird.

Das ML-Modell wird in ein übertragbares Datenformat konvertiert (z.B. Predictive Model Markup Language, PMML). Das ML-Modell wird durch Mechanismen in einen Container injiziert, beispielsweise nach dem "dependency injection" Pattern.

Anschließend agiert das ML-Modell als HP-Planner. Dies wird durch eine sogenannte Scoring-Engine ermöglicht.

Ein Scoring-Engine ist ein Programm, das exportierte ML-Modell (z.B. in PMML) interpretieren kann, sodass die Kombination von Scoring-Engine und trainiertem ML-Modell als Prädiktor oder Klassifikator in Betrieb verwendet werden kann.

Beispielsweise berechnet die Scoring-Engine eine Funktion $\sqrt{x}$ , wenn ein ML-Modell die Funktion $\sqrt{x}$ emuliert, indem das ML-Modell wie ein Orakel befragt wird.

Die Injektion eines oder mehrerer neuer statistischer Emulatoren kann zu beliebigen Zeitpunkten erfolgen, da der HA-Planer immer zur Verfügung steht, falls der HP-Planer gerade ersetzt wird.

Die Erfindung erweitert die Simplex-Architektur um einen Mechanismus zur Anpassung des HP-Programms während der Laufzeit. Anpassung bedeutet in diesem Zusammenhang, dass eine HP-Programmversion, also der zweite Programmcode 22, bei laufendem System, durch einen anderen Programmcode ersetzt wird.

Dies wird durch die Verwendung eines Machine Learning (ML) - Algorithmus erreicht, der auf einer externen Rechenplattform ausgeführt wird, um Emulatoren des HP-Programms in Form von trainierten ML-Modellen zu erzeugen. Diese Technik ist in der Literatur als statistische Emulation bekannt.

Die trainierten ML-Modelle, die als statistische Emulatoren bezeichnet werden, nehmen dieselben Eingaben auf und erzeugen dieselben Ausgaben wie das HP-Programm mit einer bestimmten Fehler- oder Ausfallrate, die von der Komplexität der zu emulierenden Funktion abhängt.

Typische Ausfallraten liegen zwischen 0 und 2%.

Wenn der statistische Emulator 70 ausfällt oder fehlerhafte Ergebnisse produziert, wird das Ergebnis des HA-Planers zur Ausführung weitergeleitet, je nach Anforderung der Simplex-Architektur.

Statistische Emulatoren werden mittels einer Emulationsplattform 60 in einer performanten Recheninfrastruktur für statistische Emulation generiert, die in einer Cloud-Umgebung oder als Teil der eigenen IT-Infrastruktur eines Unternehmens betrieben werden können.

Ein Ausführungsmonitor in Form der Überwachungsvorrichtung 50 stellt der Emulationsplattform 60 Ausführungsprotokolle 140 zur Verfügung, mit denen die Genauigkeit eines statistischen Emulators verbessert werden kann, wie weiter unten unter Fig. 2 näher beschrieben.

Für jeden eingehenden Steuerbefehl 10 protokolliert der Ausführungsmonitor, d.h. die Überwachungsvorrichtung 50 den HP Plan, d.h. den zweiten Programmcode 22, sowie das Ergebnis des Abnahmetests durch die Testvorrichtung 30, der für diesen bestimmten HP Plan, d.h. zweiten Programmcode 22 durchgeführt wurde.

Die zweite Rechenvorrichtung 12 und die Testvorrichtung 30 bilden eine Ausführungsvorrichtung 80.

Wenn der HP Plan bzw. der zweite Programmcode 22 die Abnahme besteht und zur Ausführung weitergeleitet wird, protokolliert die Überwachungsvorrichtung 50 auch eine Eingabe in den Aktuatoren, d.h. die zumindest eine Steuerinstruktion 41, welche von der Steuervorrichtung 40 auf der Grundlage des HP Plans, d.h. des zweiten Programmcodes 22 berechnet wird, sowie einen oder mehrere entsprechende Sensorwerte, d.h. einen oder mehrere Betriebsparameter 42 nach der Ausführung des HP Plans, d.h. des zweiten Programmcodes 22.

Diese Daten, die die Wirksamkeit des HP-Plans in Aktion widerspiegeln, werden auch als Feedback in Form des Überwachungsparameters 51 in die "Statistical Emulation Platform" in Form der Emulationsplattform 60 eingespeist.

Ein neuer und verbesserter statistischer Emulator sollte während der Laufzeit des Systems eingefügt werden. Die Einfügung wird durch die Verwendung einer Scoring-Engine für trainierte ML-Modelle in der Ausführungsumgebung erleichtert.

Statistische Emulatoren können während der Laufzeit dynamisch als serialisierte Objekte in einen Ausführungscontainer injiziert werden, indem das Entwurfsmuster der Abhängigkeitsinjektion implementiert wird. Statistische Emulatoren werden mithilfe einer Scoring-Engine (Softwarekomponenten die trainierte ML-Modelle als Prädiktoren oder Klassifikatoren anhand von Eingangsdaten ausführen kann) für trainierte ML-Modelle initialisiert.

Nach der Initialisierung wird die Scoring-Engine zusammen mit trainierten ML-Modellen in einem Ausführungscontainer als statistischer Emulator verwendet, welcher mit denselben Eingabeparametern wie das HA-Programm aufgerufen werden kann.

Statistische Emulatoren können mit einem der verfügbaren tragbaren Datenformate für trainierte ML-Modelle serialisiert werden, für die Generatoren und Evaluatoren für eine ganze Reihe von Programmiersprachen, einschließlich R, Python und Java, vorhanden sind.

Die "Predictive Model Markup Language" (PMML) und das aufkommende "Portable Format for Analytics" (PFA) unterstützen derzeit die Serialisierung von trainierten ML-Modellen in XML bzw. JSON.

Für ein Verfahren zum Generieren eines statistischen Emulators 70 für Hochleistungsfunktionen können Maschinenlernalgorithmen wie Random Forest, nichtlineare Regression, neuronale Netze, Deep Learning usw. verwendet werden, um statistische Emulatoren für Ausführungsplanungs- und Produktionsoptimierungsprogramme für verschiedene CPPS-Systeme zu generieren.

Wie zuvor beschrieben kann die Emulationsplattform 60 und der statistische Emulator 70 ein Verfahren ausführen, welches auf dem Prinzip des maschinellen Lernens beruht.

Wenn diese Bedingung erfüllt ist, können ML-Modelle mit beliebigen Ausführungsplanungs- und Produktionsoptimierungsfunktionen trainiert werden, die möglicherweise auf diesen Zweck zugeschnitten werden müssen.

Dies stellt eine neuartige Verwendung von ML-Algorithmen dar. Es gibt mindestens vier Szenarien, in denen die statistische Emulation von Ausführungsplanern von Vorteil ist:

1. Die Implementierung des Ausführungsplaners hat eine hohe Komplexität (z. B. zyklomatische McCabe-Komplexität) und/oder verwendet Bibliotheken von Drittanbietern (beispielsweise für ML und komplexe statistische Berechnungen), die nicht in die CPPS-Software integriert werden können aus Gründen der Sicherheit, Performance, Zuverlässigkeit und Wartbarkeit. In diesen Fällen helfen statistische Emulatoren, die auf trainierten ML-Modellen basieren und zur Laufzeit in das Simplex-Modul injiziert werden können, die Leistung zu verbessern und gleichzeitig die Komplexität des Systems zu reduzieren, indem die Integration komplexer und rechenintensiver Softwarekomponenten von Drittanbietern in die betriebsbereite CPPS-Software vermieden wird. Die einzige externe Softwarekomponente, die in Programmcode implementiert und im System eingebettet ist, ist eine Scoring-Engine, welche für alle trainierten ML-Modelle dieselbe ist. Scoring-Engines sind einfache Programme, die formal und exhaustiv getestet werden können.

2. Der Ausführungsplaner nutzt intensiv die Daten, die von den Ausführungsmonitoren vieler (möglicherweise geographisch) verteilter CPPS bereitgestellt werden, um seine Planungs- und Optimierungsstrategie zu verbessern. In diesem Fall vermeiden statistische Emulatoren häufige Probleme bei der parallelen Ausführung und Kommunikation verteilter Softwarekomponenten, die beispielsweise in eng gekoppelten Systemarchitekturen auftreten können.

3. Aufgrund von sich ändernden Anforderungen oder auftretendem Verhalten im CPPS muss der Ausführungsplanungs- und Ausführungsoptimierungs-Algorithmus möglicherweise während des Produktivbetriebs angepasst oder ersetzt werden. In diesem Fall kann ein neuer statistischer Emulator 70 des HP-Planers, d.h. der zweiten Rechenvorrichtung 12 in das adaptive Simplex-Modul eingefügt werden, ohne die Planausführung zu unterbrechen.

4. Der Ausführungsplaner selbst verwendet intern einen Algorithmus für maschinelles Lernen. In diesem Fall stellt die statistische Emulation eine einfache und zuverlässige Alternative zum Einbetten von ML-Bibliotheken von Drittanbietern in die betriebliche CPPS-Software dar, wenn das direkte Einbetten solcher Bibliotheken das Risiko erhöht, dass unnötige Komplexität und Nichtdeterminismus in das System einbezogen werden.

Sei $f_{orig}(x) \rightarrow y$ die ursprüngliche optimale Planungsfunktion und $f_{emu}(x) \rightarrow y'$ ein statistischer Emulator 70 auf der Grundlage eines mit $f_{orig}$ trainierten maschinellen Lernmodells. Dabei gilt:

- $x$ steht für eine endliche Menge von numerischen oder kategorischen Eingabeparametern,
- $y$ steht für die endliche Menge von numerischen oder kategorischen Ausgaben der zu emulierenden Funktion, und
- $y'$ steht für die endliche Menge von numerischen oder kategorischen Ausgaben, die vom statistischen Emulator 70 der Originalfunktion erzeugt werden.

Mit dem in **Fig. 2** dargestellten Verfahren kann ein statistischer Emulator 70 für $f_{orig}$ erstellt werden. Ausgehend von einem optimalen Planungsproblem 150 (z. B. eine Bewegungsplanung) wird die optimale Planungsfunktion $f_{orig}$ in einer Programmiersprache und einer für die Lösung der am besten geeigneten Programmierumgebung implementiert (z. B. R, Matlab, Mathematica, usw.). Eine Auswahl 120 eines geeigneten maschinellen Lernalgorithmus, der die ursprüngliche Funktion durch Klassifizierung oder Regression emulieren kann, kann eine Analyse 110 manuell von einem Programmierer-Analyst (oder Data Scientist) oder automatisch unter Verwendung eines spezialisierten Softwaretools (z. B. Matlab) durchgeführt werden.

Die Auswahl 120 kann beispielsweise aus einem Clustering, einer Klassifikation, einer (nicht-) linearen Regression, einem Random-Forest, einem neuralen Netzwerk, einer Support-Vector-Machine etc. getroffen werden.

Wenn die Ein- und Ausgänge von $f_{orig}$ kontinuierliche numerische Variablen darstellen, sollte der statistische Emulator für die Regression durch ein Training 100 trainiert werden. Wenn die Semantik von $f_{orig}$ auf ein Klassifizierungsproblem reduziert werden kann (z. B. lange Sequenzen von Bedingungsklauseln) und die möglichen Ausgaben auf eine begrenzte Anzahl von Klassen (typischerweise weniger als 50) beschränkt sind, sollte der statistische Emulator für Klassifizierung trainiert werden. Wenn $f_{orig}$ eine multivariate Ausgabe erzeugt, erfordert der statistische Emulator die Verwendung eines ML-Algorithmus, der zur multivariaten Vorhersage fähig ist (z. B. neuronale Netze), oder das Training eines ML-Modells für jede Ausgangsvariable.

Im Training 100 generiert die Funktion "generateTrainingSet" mit $f_{orig}$ einen Trainingssatz "ts" einer bestimmten Größe "SIZE" für die Verwendung mit der Funktion "trainModel", die den ausgewählten Algorithmus für maschinelles Lernen ($alg^{ML}$) verwendet, um ein trainiertes ML-Modell ($model^{ML}$) zu erstellen. Der statistische Emulator $f_{emu}$ erzeugt ein emuliertes Ergebnis $y'$, welches der Ausgabe von $f_{orig}$ für eine beliebige Eingabe $x$ entspricht, indem das trainierte ML-Modell bewertet wird. Die Genauigkeit des Emulators hängt von der Komplexität der zu emulierenden Funktion und der Leistungsfähigkeit des verwendeten ML-Algorithmus ab.

$f_{emu}$ kann als adaptiver HP-Planer verwendet werden, indem es während der Laufzeit dynamisch in das adaptive Simplex-Modul injiziert wird.

Aus der Fig. 1 ist auch ein Ausführungsbeispiel einer erfindungsgemäßen Vorrichtung zur Ansteuerung einer technischen Anlage 1 erkennbar.

Die Vorrichtung umfasst eine erste Rechenvorrichtung 11, welche eine sichere Rechenumgebung bildet und dazu eingerichtet ist, einen ersten Programmcode 21 bereitzustellen.

Die Vorrichtung umfasst ferner eine zweite Rechenvorrichtung 12, welche eine schnelle Rechenumgebung bildet und dazu eingerichtet ist, einen zweiten Programmcode 22 bereitzustellen.

Die Vorrichtung umfasst außerdem eine Testvorrichtung 30, welche dazu eingerichtet ist, den zweiten Programmcode 22 auszuführen und zumindest einen Verifikationsparameter 31 für den zweiten Programmcode 22 zu bestimmen.

Die Vorrichtung umfasst ferner eine Steuervorrichtung 40, welche dazu eingerichtet ist, abhängig vom Erreichen eines vorbestimmten Kriteriums für den zumindest einen Verifikationsparameter 31 entweder den ersten Programmcode 21 oder den zweiten Programmcode 22 auszuführen und zumindest eine Steuerinstruktion 41 zur Ansteuerung der technische Anlage 1 zu erzeugen, sowie zumindest einen Betriebsparameter 42 der technischen Anlage 1 zu erfassen.

Die Vorrichtung umfasst auch eine Überwachungsvorrichtung 50, welche dazu eingerichtet ist zumindest einen Überwachungsparameter 51 ausgewählt aus der Gruppe von dem zweiten Programmcode 22, dem zumindest einen Verifikationsparameter 31, der zumindest einen Steuerinstruktion 41 und dem zumindest einen Betriebsparameter 42,

zu bestimmen, und eine Emulationsplattform 60 dazu eingerichtet ist, zumindest ein ausführbares Modell 61 zu erzeugen, welches durch einen, von der zweiten Reichenvorrichtung 12 umfassten, statistischen Emulator 70 bei der Bestimmung des zweiten Programmcodes 22 herangezogen wird.

Die technische Anlage 1 kann beispielsweise eine Produktionsanlage zur Herstellung technischer Güter, eine Testanlage von technischen Gütern oder eine Messeinrichtung zum Vermessen von technischen Gütern sein.

In **Fig. 2** ist die Trennung zwischen einer statistischen Emulationsplattform 60 und einer CPPS Laufzeitumgebung 200 erkennbar.

Vom Ausführungsmonitor, d.h. die Steuervorrichtung 40 gesammelte Ausführungsprotokolle 140 ("Execution Logs"), einschließlich der operativen Ein- und Ausgaben von statistischen Emulatoren, die als HP-Planer bzw. als zweite Rechenvorrichtung 12 verwendet werden, können sowohl für das (Re-) Training von ML-Modellen als auch für die Verbesserung der statistischen Modellierung des vorliegenden Problems, beispielsweise ein Planungsproblem 150 für eine Bewegungsplanung eines Roboterarms, verwendet werden.

Bessere statistische Emulatoren können mithilfe optimierter HP-Planungsfunktionen generiert und in das adaptive Simplex-Modul (erneut) eingefügt werden.

Statistische Emulatoren, die auf trainierten ML-Modellen basieren, können unter Verwendung eines portablen Datenformats wie PMML oder PFA exportiert werden, für welche Scoring-Engines in verschiedenen Programmiersprachen vorhanden sind.

Die Übergabe eines neuen ausführbaren Modells 61 ("injection") in Form exportierter ML-Modelle kann nach dem "publish-subscribe"-Entwurfsmuster implementiert werden, wobei die Abonnenten ("subscribers") durch die in der Zielumgebung ausgeführten HP Planer-Container und der Herausgeber ("publisher") durch einen auf der Plattform für statistische Emulation gehosteten Injektionsdienst dargestellt werden.

Der Injektionsdienst benachrichtigt die Abonnenten, sobald ein besseres ML-Modell verfügbar ist. Nach der Benachrichtigung können die Abonnenten das neue ML-Modell herunterladen und für die Verwendung in der Zielumgebung initialisieren.

Die Genauigkeit der statistischen Emulatoren hängt von der Komplexität der zu emulierenden Funktion und der Leistungsfähigkeit des verwendeten ML-Algorithmus ab, wobei statistische Emulatoren komplexer Funktionen mit höherer Wahrscheinlichkeit weniger genau sind.

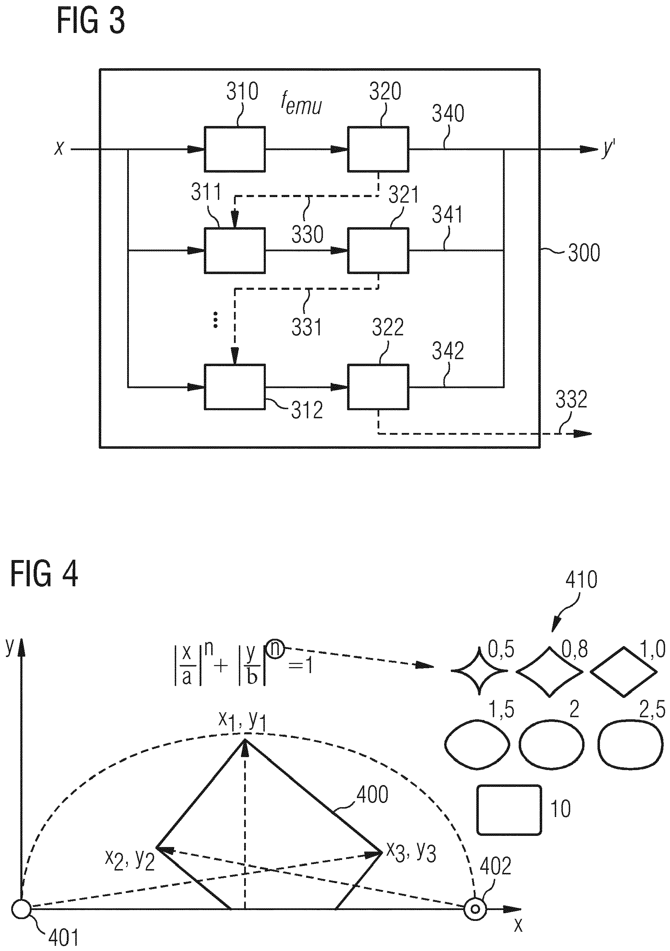

Die Ausfallrate von statistischen Emulatoren kann reduziert werden, indem mehrere redundante ML-Modelle für die gleiche Funktion verwendet werden, die in einem Recovery Block-Schema emuliert werden, wie in **Fig. 3** in einem Ausführungsbeispiel für eine Ausführungsvorrichtung 300 mit einen statistischen Emulator nach dem Recovery Block-Schema dargestellt, welcher anstelle der Ausführungsvorrichtung 80 mit dem statistischen Emulator 70 verwendet werden kann.

Es sind trainierte ML-Modelle 310-312 mit verschiedenen ML Modell-Versionen 1, 2 und *n* dargestellt, welche mit Eingabedaten *x* gespeist werden und die Modelle von jeweiligen Akzeptanz-Testvorrichtungen 320-322 getestet werden.

Wird ein Test nicht bestanden (Pfade 330-332), so wird die jeweils nächste Modell-Version mit den Eingabedaten *x* getestet. Wird ein Test bestanden (Pfade 340-342), so wird das Ergebnis des Tests *y'* ausgegeben.

Der statistische Emulator 70 kann ein Verfahren ausführen, welches auf dem Prinzip des Recovery Block-Ansatzes beruht.

Um diese Methode effektiv zu gestalten, sollten redundante Modelle mit verschiedenen (zufällig generierten) Trainingssätzen und, wenn möglich, mit unterschiedlichen ML-Algorithmen trainiert werden.

In diesem Zusammenhang ist es weniger wahrscheinlich, dass ML-Modellversionen, die mit unterschiedlichen Trainingssätzen und/oder unterschiedlichen ML-Algorithmen trainiert werden, bei denselben Eingaben versagen. Dies macht den Recovery Block zuverlässiger als jedes einzelne ML-Modell in Bezug auf den verwendeten Abnahmetest, der mit dem des Simplex-Moduls identisch sein muss.

Um die Wirksamkeit der adaptiven Simplex-Architektur zu demonstrieren, betrachten wir eine optimale Bewegungsplanungsanwendung mit Hindernisvermeidung für einen einarmigen, kollaborationsfähigen Roboter, wie den in Abbildung 2 dargestellten.

**Fig. 4** zeigt eine einfache und intuitive Lösung für das optimale Bewegungsplanungsproblem, welches auf einer Lösung einer Superellipsen-Gleichung beruht und ein Roboter Hindernissen ausweicht. Die Z-Achse ist nicht dargestellt. Der mit einem Greifer ausgestattete Roboter wird angewiesen, ein Werkstück vom Start 401 an Position (0, 0) bis zum Ziel 402 an Position (100,0) aufzunehmen und zu platzieren ("pick and place").

Das Schema in Fig. 4 geht davon aus, dass die Start- und Zielpunkte bereits auf ein Koordinatensystem projiziert wurden, in dem die direkte Bewegungsbahn zwischen den beiden Punkten durch die X-Achse dargestellt wird. Diese Projektion ermöglicht es auch, das optimale Bewegungsplanungsproblem 150 von drei auf zwei Dimensionen zu reduzieren. Das Hindernis 400 wird als Projektion einer Punktwolke auf das neue Koordinatensystem dargestellt.

Das optimale Bewegungsplanungsproblem erfordert das Finden der effizientesten Bewegungsbahn zwischen Start (dem Punkt, an dem der Roboter das Werkstück auswählt) und Ziel (dem Punkt, an dem der Roboter das Werkstück platzieren muss), so dass die vom Roboter zurückgelegte Gesamtstrecke minimiert und dem Hindernis 400 ausgewichen wird.

Die erwartete Ausgabe ist eine parametrisierte Gleichung (oder ein symbolischer Ausdruck), die verwendet werden kann, um Wegpunkte für den Roboterarm zu definieren und/oder einige mögliche Bewegungsbahnbeschränkungen zur Vermeidung des Hindernisses 400 zu definieren. Es wird davon ausgegangen, dass die erforderlichen Kinematik-Modelle und -Algorithmen in der Firmware des Roboters implementiert sind.

Eine intuitive Lösung für dieses Problem ist in Fig. 4 dargestellt. Durch die Verwendung von Superellipsen-Gleichung (oder Lame-Kurven) und die Optimierung ihrer charakteristischen Parameter $b$ (der Skalierungsfaktor auf der Y-Achse) und $n$ ist es möglich, eine realisierbare Bewegungsbahn zu finden, welche die Länge des Pfads zwischen Start und Ziel minimiert. Abhängig vom Wert von $n$ nimmt die Superellipse unterschiedliche Formen an, wobei kleinere Werte von $n$ zu kleineren Ellipsenumfängen führen, wodurch kürzere Wege durch den Arm des Roboters zurückgelegt werden müssen.

Das Minimieren der Länge des Pfads zwischen Start und Ziel erfordert folglich das Minimieren von $b$ und $n$, so dass alle Punkte des Hindernisses 400 in der durch die Parameter $a$, $b$ und $n$ beschriebenen Ellipse enthalten sind. Diese Bedingung repräsentiert den Abnahmetest (AT) der Anwendung. Um das Optimierungsproblem zu lösen, genügt es nur drei Punkte (als Extrempunkte bezeichnet) des Hindernisses 400 zu betrachten, wie in Fig. 4 dargestellt:

- $(x_1, y_1) \rightarrow$ Der Punkt mit dem maximalen $y$-Wert.
- $(x_2, y_2) \rightarrow$ Der Punkt, der am weitesten vom Ziel entfernt ist.
- $(x_3, y_3) \rightarrow$ Der Punkt, der am weitesten vom Start entfernt ist.

Der Algorithmus, der das Bewegungsplanungsproblem löst, verwendet die drei Extrempunkte und $x_{Ziel}$. Durch Backtracking zur numerischen Optimierung werden $b$ und $n$ so variiert, dass der Gesamtumfang minimiert wird, während der Abnahmetest für die aktuellen Werte von $b$ und $n$ für alle drei Extrempunkte erfüllt wird. Der Algorithmus gibt die Werte von $b$ und $n$ zurück, für die der Umfang der Ellipse, welche die drei als Eingabe bereitgestellten Extrempunkte enthält, minimiert werden.

Die zuvor beschriebene Lösung, die auf numerischer Optimierung basiert und als $f_{opt}$ bezeichnet wird, kann als HP Planer-Funktion in der ursprünglichen Simplex-Architektur verwendet werden.

Eine einfachere Version dieser Funktion mit der Bezeichnung $f_{ha}$, die $b = y_1$ plus einen konstanten Sicherheitspuffer einstellt und von 5 bis 1,5 um 0,5 variiert, ohne den Umfang der resultierenden Ellipsen zu berechnen, kann als HA-Planer-Funktion verwendet werden.

In Fig. 4 ist die Gleichung der Ellipsen erkennbar, wobei die Gleichung für verschiedene Werte von $n$ in Form von Ellipsen 410 grafisch dargestellt ist.

Der HA Planer, d.h. die erste Rechenvorrichtung 11 erzeugt den HA Plan, d.h. den ersten Programmcode 21.

Der HP Planer, d.h. die zweite Rechenvorrichtung 12 erzeugt den HP Plan, d.h. den zweiten Programmcode 22. Der statistischer Emulator 70 kann von der zweiten Rechenvorrichtung 12 umfasst sein.

Der statistische Emulator 70 der numerischen Optimierungsfunktion $f_{opt}$, der mit dem Random Forest-Algorithmus (RF) generiert wurde, wird in den HP Planer-Container injiziert, wie zuvor beschrieben. In diesem Beispiel wird das ML-Modell mit 30000 zufällig erzeugten Punktwolken trainiert, für die $f_{opt}$ zur Berechnung der optimalen Ellipsenparameter $b$ und $n$ verwendet wird. Die drei Extrempunkte zusammen mit $x_{Ziel}$, $b$ und $n$ werden als Eingabeparameter jedem Element des Trainingssatzes hinzugefügt. Das injizierbare $f_{emu}$ kann als HP Planer-Funktion in Kombination mit $f_{opt}$ oder $f_{ha}$ als HA-Planer in der adaptiven Simplex-Architektur verwendet werden. Tabelle 1 zeigt die Ergebnisse der Tests, die mit einem Eingabesatz von 10000 zufällig generierten Punktwolken durchgeführt wurden, die einem adaptiven Simplex-Modul zugeführt wurden, das R-Implementierungen von $f_{emu}$ $f_{opt}$ und $f_{ha}$ in verschiedenen Konfigurationen verwendet:

1. $f_{emu}$ wird als HP-Planer und $f_{ha}$ als HA-Planer verwendet. Diese Konfiguration, welche in einem produktiven System nützlich ist, in dem Leistung, Genauigkeit, Zuverlässigkeit und Wartbarkeit wichtig sind, entspricht der vorgeschlagenen adaptiven Simplex-Architektur.

2. $f_{emu}$ wird als HP Planer und $f_{opt}$ als HA-Planer verwendet. Diese Konfiguration kann nützlich sein, wenn die Wartungskosten für $f_{opt}$, die in einem autonomen CPPS verwendet werden, während der gesamten Lebensdauer des Systems getragen werden können.

3. $f_{opt}$ wird als HP Planer und $f_{ha}$ als HA-Planer verwendet. Diese Konfiguration kann in CPPS verwendet werden, um die grundlegende Simplex-Architektur zu implementieren.

4. $f_{ha}$ wird sowohl als HP- als auch als HA-Planer verwendet. Diese Konfiguration stellt ein "Baseline"-Konfiguration dar, bei welcher die Simplex-Architektur nicht implementiert wird und üblicherweise in CPPS verwendet wird.

| | HP-Planer | HA-Planer | Gesamte Aus-führungszeit | Pfadlänge je Durchlauf | Zuver-lässigkeit | Wartbarkeit | Anpassungs-fähigkeit |
|---|---|---|---|---|---|---|---|
| | | | [s] | [cm] | | | |
| 1 | $f_{emu}$ | $f_{ha}$ | 2.89 | 66.25 | Hoch | Hoch | Hoch |
| 2 | $f_{emu}$ | $f_{opt}$ | 15.21 | 66.03 | Mittel | Mittel | Hoch |
| 3 | $f_{opt}$ | $f_{ha}$ | 288.35 | 65.11 | Hoch | Mittel | Niedrig |
| 4 | | $f_{ha}$ | 84.14 | 70.03 | Hoch | Hoch | Niedrig |

Tabelle 1

**Interpretation der Ergebnisse:**

- Konfiguration 1, bei welcher $f_{emu}$ für die HP-Planung verwendet wird, ist 100-mal schneller, während nur um 1,5% weniger genau als bei Konfiguration 3, bei welcher $f_{opt}$ für HP-Planung verwendet wird, was jedoch eine sehr hohe Gesamtausführungszeit beansprucht.
- Die hohe Ausführungszeit bei Konfiguration 3, welche die Verwendung in einer Echtzeitanwendung verhindert, wird durch die Integralfunktion verursacht, die zur Berechnung des Umfangs der Ellipse verwendet wird.
- Die Verwendung spezieller statistischer Bibliotheken in einer operativen, möglicherweise sicherheitskritischen CPPS-Software verursacht höhere Wartungskosten, wodurch die Konfigurationen 2 und 3 nur mäßig wartbar sind.
- Die Zuverlässigkeit von Konfiguration 2 wird durch die Verwendung eines komplexen HA-Planers ($f_{opt}$) negativ beeinflusst.
- Die Anpassungsfähigkeit von Konfiguration 3 ist gering, da die Semantik von $f_{opt}$ zur Laufzeit nicht geändert werden kann.
- Konfiguration 2 ermöglicht einen guten Kompromiss zwischen Genauigkeit und Ausführungszeit durch Verwendung von $f_{opt}$ für die HA-Planung, allerdings mit einer geringeren Zuverlässigkeit als bei Konfiguration 1, da $f_{opt}$ als HA-Planer verwendet wird.

Die Ausfallrate von $f_{emu}$ für den getesteten Eingabesatz betrug 0,05%, was bedeutet, dass der HA-Planer in den Konfigurationen 1 und 2 in 0,05% der Eingabefälle ausgeführt wird.

Dies erklärt, warum die Pfadlänge pro Lauf für Konfiguration 1, welche mit dem suboptimalen $f_{ha}$ in 0,05% der Eingabefälle berechnet wurde, größer ist als für Konfiguration 2.

Die Erfindung erweitert die Simplex-Architektur, indem sie die dynamische Anpassung komplexer, leistungsstarker, optimaler Planungsfunktionen, die in der CPPS-Domäne verwendet werden, hinsichtlich

1. der Komplexität der in die eingebettete, unternehmenskritische CPPS-Software integrierten Funktionen reduziert und somit die Zuverlässigkeit erhöht wird;
2. einer Reduktion der Ausführungszeit der optimalen Planungsfunktionen ohne Einbußen bei der Genauigkeit.

Die Hauptvorteile der adaptiven Simplex-Architektur für CPPS sind:

- Ermöglicht die Entwicklung von flexiblen, anpassungsfähigen und autonomen CPPS unter Verwendung von Embedded-Softwarekomponenten mit geringer Komplexität.

- Es reduziert die Wartungskosten für CPPS-Software, indem komplexe Planungs- und Produktionsoptimierungsfunktionen durch generierte statistische Emulatoren mit geringer

Komplexität ersetzt werden.

- Ermöglicht die kontinuierliche Verbesserung der Leistung des betrieblichen CPPS ohne Ausfallzeiten durch dynamische Anpassung.
- Es kombiniert leistungsstarke Methoden aus den Bereichen Machine Learning und Software Engineering, ohne dass in beiden Bereichen Spezialwissen erforderlich ist.
- Es reduziert Entwicklungszeiten und -kosten sowie Lizenzkosten mit Bibliotheken von Drittanbietern.
- Ermöglicht die Sicherheitszertifizierung von CPPS und die Einhaltung bestehender Normen im Fertigungsbereich.

**Bezugszeichenliste**

| | |
|---|---|
| 1 | technische Anlage, Produktionsanlage, CPPE |
| 10 | Steuerbefehl |
| 11 | Rechenvorrichtung, "HA-Planer" |
| 12 | Rechenvorrichtung, "HP-Planer" |
| 21 | Programmcode, "HA Plan" |
| 22 | Programmcode, "HP Plan" |
| 30 | Testvorrichtung |
| 31 | Verifikationsparameter |
| 35 | Programmcode-Selektor |
| 40 | Steuervorrichtung, "Plan Execution" |
| 41 | Steuerinstruktion |
| 42 | Betriebsparameter |
| 50 | Überwachungsvorrichtung, "Execution Monitor" |
| 51 | Überwachungsparameter, "Feedback" |
| 60 | Emulationsplattform, "Statistical Emulation Platform" |
| 61 | Ausführbares Modell, Injektion während der Laufzeit ("runtime injection") |
| 70 | Statistischer Emulator |
| 80 | Ausführungsvorrichtung |
| 100 | Trainings-Verfahren |
| 110 | Analyse |
| 120 | Auswahl ML-Algorithmus |
| 130 | Emulations-Verfahren |
| 140 | Ausführungsprotokolle, "Execution Logs" |
| 150 | Planungsproblem |
| 200 | CPPS Laufzeit-Umgebung |
| 300 | Ausführungsvorrichtung mit einem statistischen Emulator nach dem Recovery Block-Schema |
| 310-312 | trainiertes ML-Modell, jeweilige Version |
| 320-322 | Akzeptanz-Testvorrichtung |
| 330-332 | Test nicht bestanden |
| 340-342 | Test bestanden |
| 400 | Hindernis |
| 401 | Start an der Position (0, 0) |
| 402 | Ziel an der Position ($x_{Ziel}$, 0) |
| 410 | Superellipsen |

**Patentansprüche**

1. Verfahren zur Ansteuerung einer technischen Anlage (1), in welcher, ausgehend von einem Steuerbefehl (10), eine erste Rechenvorrichtung (11) einen ersten Programmcode (21) bereitstellt und eine zweite Rechenvorrichtung (12) einen zweiten Programmcode (22) bereitstellt,

wobei die erste Rechenvorrichtung (11) eine sichere Rechenumgebung bildet und die zweite Rechenvorrichtung (12) eine schnelle Rechenumgebung bildet, und eine Testvorrichtung (30) vorgesehen ist, welche den zweiten Programmcode (22) ausführt und zumindest einen Verifikationsparameter (31) für den zweiten Programmcode (22) bestimmt, und eine Steuervorrichtung (40) abhängig vom Erreichen eines vorbestimmten Kriteriums für den zumindest einen Verifikationsparameter (31) entweder den ersten Programmcode (21) oder den zweiten Programmcode (22) ausführt und zumindest eine Steuerinstruktion (41) zur Ansteuerung der technische Anlage (1) erzeugt, sowie zumindest einen Betriebsparameter (42) der technischen Anlage (1) erfasst, **dadurch gekennzeichnet, dass** eine Überwachungsvorrichtung (50) zumindest einen Überwachungsparameter (51), ausgewählt aus der Gruppe von dem zweiten Programmcode (22), dem zumindest einen Verifikationsparameter (31), der zumindest einen Steuerinstruktion (41) und dem zumindest einen Betriebsparameter (42), bestimmt, und eine Emulationsplattform (60) zumindest ein Modell (61) bestimmt, welches durch einen, von der zweiten Rechenvorrichtung (12) umfassten, statistischen Emulator (70) zur Bestimmung des zweiten Programmcodes (22) herangezogen wird.

2. Verfahren nach dem vorhergehenden Anspruch, welches fortlaufend ausgeführt wird und wobei der zweite Programmcode (22) durch den statistischen Emulator (70) fortlaufend neu bestimmt wird.

3. Verfahren nach einem der vorhergehenden Ansprüche, wobei die Emulationsplattform (60) auf dem Prinzip des maschinellen Lernens beruht.

4. Verfahren nach einem der vorhergehenden Ansprüche, wobei der statistische Emulator (70) auf dem Prinzip des Recovery Block-Ansatzes beruht.

5. Verfahren nach einem der vorhergehenden Ansprüche, wobei das Kriterium für den zumindest einen Verifikationsparameter (31) ein Parameter ist, welcher ein Maß für die Stabilität bei der Ausführung des zweiten Programmcodes (22) durch die Testvorrichtung (30) ist.

6. Verfahren nach einem der vorhergehenden Ansprüche, wobei der zumindest ein Betriebsparameter (42) ein Parameter ist, welcher ein Maß für Vibrationen, die Betriebstemperatur oder die Energieaufnahme der technischen Anlage (1) ist.

7. Verfahren nach einem der vorhergehenden Ansprüche, wobei die zumindest eine Steuerinstruktion (41) zur Ansteuerung eines Roboters vorgesehen ist.

8. Vorrichtung zur Ansteuerung einer technischen Anlage (1), umfassend

eine erste Rechenvorrichtung (11), welche eine sichere Rechenumgebung bildet und dazu eingerichtet ist, einen ersten Programmcode (21) bereitzustellen, und eine zweite Rechenvorrichtung (12), welche eine schnelle Rechenumgebung bildet und dazu eingerichtet ist, einen zweiten Programmcode (22) bereitzustellen, und eine Testvorrichtung (30), welche dazu eingerichtet ist, den zweiten Programmcode (22) auszuführen und zumindest einen Verifikationsparameter (31) für den zweiten Programmcode (22) zu bestimmen, und eine Steuervorrichtung (40), welche dazu eingerichtet ist, abhängig vom Erreichen eines vorbestimmten Kriteriums für den zumindest einen Verifikationsparameter (31) entweder den ersten Programmcode (21) oder den zweiten Programmcode (22) auszuführen und zumindest eine Steuerinstruktion (41) zur Ansteuerung der technische Anlage (1) zu erzeugen, sowie zumindest einen Betriebsparameter (42) der technischen Anlage (1) zu erfassen, **dadurch gekennzeichnet, dass** ferner eine Überwachungsvorrichtung (50) umfasst ist, welche dazu eingerichtet ist zumindest einen Überwachungsparameter (51) ausgewählt aus der Gruppe von dem zweiten Programmcode (22), dem zumindest einen Verifikationsparameter (31), der zumindest einen Steuerinstruktion (41) und dem zumindest einen Betriebsparameter (42), zu bestimmen, und eine Emulationsplattform (60) dazu eingerichtet ist, zumindest ein Modell (61) zu erzeugen, welches durch einen, von der zweiten Reichenvorrichtung (12) umfassten, statistischen Emulator (70) bei der Bestimmung des zweiten Programmcodes (22) herangezogen wird.

9. Vorrichtung nach dem vorhergehenden Anspruch, wobei die technische Anlage (1) eine Produktionsanlage zur Herstellung technischer Güter, eine Testanlage von technischen Gütern oder eine Messeinrichtung zum Vermessen von technischen Gütern ist.

**10.** Vorrichtung nach einem der beiden vorhergehenden Ansprüche, wobei die Emulationsplattform (60) eine virtuelle Maschine einer Cloud ist.

**Claims**

**1.** Method for controlling a technical installation (1), in which, on the basis of a control command (10), a first computing apparatus (11) provides a first program code (21) and a second computing apparatus (12) provides a second program code (22), wherein the first computing apparatus (11) forms a secure computing environment and the second computing apparatus (12) forms a fast computing environment,

and a test apparatus (30), which executes the second program code (22) and determines at least one verification parameter (31) for the second program code (22), is provided,
and a control apparatus (40) executes either the first program code (21) or the second program code (22) depending on whether a predetermined criterion for the at least one verification parameter (31) is met, and generates at least one control instruction (41) for controlling the technical installation (1) and records at least one operating parameter (42) of the technical installation (1),
**characterized in that** a monitoring apparatus (50) determines at least one monitoring parameter (51), which is selected from the group consisting of the second program code (22), the at least one verification parameter (31), the at least one control instruction (41) and the at least one operating parameter (42), and an emulation platform (60) determines at least one model (61), which is employed by a statistical emulator (70) comprised by the second computing apparatus (12) to determine the second program code (22).

**2.** Method according to the preceding claim, which is performed continuously, and wherein the second program code (22) is continually determined anew by the statistical emulator (70).

**3.** Method according to either of the preceding claims, wherein the emulation platform (60) is based on the principle of machine learning.

**4.** Method according to one of the preceding claims, wherein the statistical emulator (70) is based on the principle of the recovery block approach.

**5.** Method according to one of the preceding claims, wherein the criterion for the at least one verification parameter (31) is a parameter which is a measure of stability during the execution of the second program code (22) by the test apparatus (30) .

**6.** Method according to one of the preceding claims, wherein the at least one operating parameter (42) is a parameter which is a measure of vibrations, the operating temperature or the energy consumption of the technical installation (1).

**7.** Method according to one of the preceding claims, wherein the at least one control instruction (41) is intended for controlling a robot.

**8.** Apparatus for controlling a technical installation (1), comprising

a first computing apparatus (11), which forms a secure computing environment and is designed to provide a first program code (21), and
a second computing apparatus (12), which forms a fast computing environment and is designed to provide a second program code (22),
and a test apparatus (30), which is designed to execute the second program code (22) and to determine at least one verification parameter (31) for the second program code (22), and a control apparatus (40), which is designed to execute either the first program code (21) or the second program code (22) depending on whether a predetermined criterion for the at least one verification parameter (31) is met, and to generate at least one control instruction (41) for controlling the technical installation (1) and to record at least one operating parameter (42) of the technical installation (1),
**characterized in that** a monitoring apparatus (50) is furthermore comprised, said monitoring apparatus being designed to determine at least one monitoring parameter (51), which is selected from the group consisting of the second program code (22), the at least one verification parameter (31), the at least one control instruction (41) and the at least one operating parameter (42), and an emulation platform (60) is designed to generate at least one model (61), which is employed by a statistical emulator (70) comprised by the second computing apparatus (12) in the determination of the second program code (22).

**9.** Apparatus according to the preceding claim, wherein the technical installation (1) is a production installation for producing technical goods, a test installation for technical goods or a measuring device for measuring technical goods.

**10.** Apparatus according to either of the two preceding claims, wherein the emulation platform (60) is a virtual machine of a cloud.

**Revendications**

**1.** Procédé de contrôle d'une installation technique (1), dans laquelle, à partir d'une instruction de commande (10), un premier dispositif de calcul (11) met à disposition un premier code de programme (21) et un deuxième dispositif de calcul (12) met à disposition un deuxième code de programme (22),

dans lequel le premier dispositif de calcul (11) constitue un environnement de calcul sûr et le deuxième dispositif de calcul (12) constitue un environnement de calcul rapide,
et un dispositif de test (30) est prévu, qui exécute le deuxième code de programme (22) et détermine au moins un paramètre de vérification (31) pour le deuxième code de programme (22),
et un dispositif de commande (40) exécute, en fonction du fait qu'un critère prédéterminé pour l'au moins un paramètre de vérification (31) est atteint ou non, soit le premier code de programme (21) soit le deuxième code de programme (22) et génère au moins une instruction de commande (41) pour le contrôle de l'installation technique (1) et mesure au moins un paramètre de fonctionnement (42) de l'installation technique (1), **caractérisé en ce qu'**un dispositif de surveillance (50) détermine au moins un paramètre de surveillance (51), sélectionné dans le groupe constitué du deuxième code de programme (22), de l'au moins un paramètre de vérification (31), de l'au moins une instruction de commande (41) et de l'au moins un paramètre de fonctionnement (42), et une plate-forme d'émulation (60) détermine au moins un modèle (61) qui est utilisé par un émulateur statistique (70), inclus dans le deuxième dispositif de calcul (12), pour la détermination du deuxième code de programme (22).

**2.** Procédé selon la revendication précédente, qui est exécuté en continu et dans lequel le deuxième code de programme (22) est re-déterminé en permanence par l'émulateur statistique (70).

**3.** Procédé selon l'une des revendications précédentes, dans lequel la plate-forme d'émulation (60) repose sur le principe de l'apprentissage automatique.

**4.** Procédé selon l'une des revendications précédentes, dans lequel l'émulateur statistique (70) repose sur le principe de l'approche « recovery block ».

**5.** Procédé selon l'une des revendications précédentes, dans lequel le critère pour l'au moins un paramètre de vérification (31) est un paramètre qui constitue une mesure pour la stabilité lors de l'exécution du deuxième code de programme (22) par le dispositif de test (30).

**6.** Procédé selon l'une des revendications précédentes, dans lequel l'au moins un paramètre de fonctionnement (42) est un paramètre qui constitue une mesure pour les vibrations, la température de fonctionnement ou la consommation d'énergie de l'installation technique (1).

**7.** Procédé selon l'une des revendications précédentes, dans lequel l'au moins une instruction de commande (41) est prévue pour le contrôle d'un robot.

**8.** Dispositif pour le contrôle d'une installation technique (1) comprenant

un premier dispositif de calcul (11) qui constitue un environnement de calcul sûr et qui est conçu pour mettre à disposition un premier code de programme (21) et
un deuxième dispositif de calcul (12) qui constitue un environnement de calcul rapide et qui est conçu pour mettre à disposition un deuxième code de programme (22),

et un dispositif de test (30) qui est conçu pour exécuter le deuxième code de programme (22) et pour déterminer au moins un paramètre de vérification (31) pour le deuxième code de programme (22),

et un dispositif de commande (40) qui est conçu pour exécuter, en fonction du fait qu'un critère prédéterminé pour l'au moins un paramètre de vérification (31) est atteint ou non, soit le premier code de programme (21) soit le deuxième code de programme (22) et pour générer au moins une instruction de commande (41) pour le contrôle de l'installation technique (1) et mesurer au moins un paramètre de fonctionnement (42) de l'installation technique (1),

**caractérisé en ce que**, en outre, un dispositif de surveillance (50) est inclus, qui est conçu pour déterminer au moins un paramètre de surveillance (51), sélectionné dans le groupe constitué du deuxième code de programme (22), de l'au moins un paramètre de vérification (31), de l'au moins une instruction de commande (41) et de l'au moins un paramètre de fonctionnement (42), et une plate-forme d'émulation (60) est conçue pour déterminer au moins un modèle (61) qui est utilisé par un émulateur statistique (70), inclus dans le deuxième dispositif de calcul (12), pour la détermination du deuxième code de programme (22).

9. Dispositif selon la revendication précédente, dans lequel l'installation technique (1) est une installation de production pour la fabrication d'articles techniques, une installation de test d'articles techniques ou un dispositif de mesure pour la mesure d'articles techniques.

10. Dispositif selon l'une des deux revendications précédentes, dans lequel la plate-forme d'émulation (60) est une machine virtuelle d'un cloud.

# FIG 1

# FIG 2

# FIG 3

# FIG 4

$$\left|\frac{x}{a}\right|^n + \left|\frac{y}{b}\right|^n = 1$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019056735 A1